# EUROPEAN PATENT APPLICATION

(11) **EP 2 811 075 A1**
(43) Date of publication of application: **10.12.2014**
(21) Application number: 14001921.7
(22) Date of filing: 03.06.2014
(51) Int. Cl.: E02D 29/05, E01C 11/22, E21F 16/02, E01F 5/00

(54) **Tunnel drainage arrangement**

(30) Priority: 03.06.2013 NL 1040236
(71) Applicant: Haner Infra Innovatie B.V., 8096 CM Oldebroek (NL)
(72) Inventor: Van Kolthoorn, Johannes, 8096 CM Oldebroek (NL)
(74) Representative: Ferguson, Alexander

(57) **Abstract**

Tunnel arrangement (1) comprising a tunnel tube (2) having a tunnel floor (5) and one or more substantially water-impermeable tunnel portals (3) that run upwardly inclined from a lower end situated near the tunnel floor (5) to an upper end (7a), wherein the tunnel is placed in a soil, in which soil a poorly permeable or impermeable layer is present, such that the tunnel floor (5) extends into or deeper than the poorly permeable or impermeable layer, wherein confined water, in particular artesian water, is present below the poorly permeable or impermeable layer, wherein near the upper end (7a) of the tunnel portal (3) a water discharging drainage duct (14) is arranged, preferably extending transverse to the tunnel portal (3), which duct (14) is provided with at least one first passage (24) situated in the soil for receiving the confined water from the soil.

## Description

### BACKGROUND OF THE INVENTION

The invention relates to a tunnel arrangement. By tunnel arrangement is meant an engineering structure including a tunnel formed by a sunken road that may or may not be covered by a cover and trough-shaped tunnel portals that connect thereto. An example of a sunken road covered by a cover is a passage underneath for instance a railroad, a river or a waterway or canal (aqueduct). An example of an uncovered sunken road is a trough as can be found in the A27 near the city of Utrecht, the Netherlands. Such engineering structures are usually made of prefab concrete elements or of concrete poured in situ. The sitting and upright concrete walls of the tunnel and tunnel portals are water-impermeable.

When designing the tunnel structure water management should be paid special attention to. For draining precipitation falling down on the tunnel portals, transverse drains and water cellars connected thereto are provided at the location of the connections between tunnel portals and tunnel floor, in which drains and cellars the water flowing down from the tunnel portals is received and from which it is then pumped away to open water or sewer.

The soil in which the tunnel is being arranged may contain poorly permeable and/or impermeable layers. In that case the tunnel floor and connecting parts of the tunnel portals may extend into or through them and be in contact with groundwater having a hydrostatic pressure head above the upper end of the tunnel portals. Said groundwater is also called (semi) confined water. When the hydrostatic pressure head is above ground level it is called artesian water.

The tunnel floor and connecting parts disrupt the integrity of the poorly permeable or impermeable layer and, along the outer surface, they constitute upward leakage paths for the (semi) confined water. A part thereof may escape upwards along the lower side of the tunnel portals to the surroundings of the upper end of the tunnel portals. At that location usually a road surface connects that is poorly permeable or impermeable per se, as for instance is the case in non-porous asphalt concrete. The pressure exerted against the road surface by confined water may lead to cracks in the surface. It is possible that upwardly outflowing water forms ice on the road surface and on the tunnel portals in frosty periods, which causes danger to the users. Escaping to the roadsides, if this could give relief at all, is hardly possible when there are clay layers at that location and/or due to the area of the access to the tunnel portals usually having a sunken position relative to ground level.

### SUMMARY OF THE INVENTION

It is an object of the invention to provide a tunnel arrangement of the type mentioned in the preamble in which the problems mentioned relating to escaping confined water can be reduced.

For that purpose the invention, according to one aspect, provides a tunnel arrangement comprising a tunnel trough having a tunnel floor and one or more substantially water-impermeable tunnel portals that run upwardly inclined from a lower end situated near the tunnel floor to an upper end, wherein the tunnel is placed in a soil, in which soil a poorly permeable or impermeable layer is present, such that the tunnel floor extends into or deeper than the poorly permeable or impermeable layer, wherein confined water, in particular artesian water, is present below the poorly permeable or impermeable layer, wherein near the upper end of the tunnel portal a water discharging drainage duct is arranged, preferably extending transverse to the tunnel portal, which duct is provided with at least one first passage situated in the soil or opening therein for receiving the confined water from the soil. In this way the confined water is offered an escape option, via the first passage and the duct, at the location of the transition between the tunnel portal and the road surface, as a result of which high pressure building up against the lower side of an in particular substantially water-impermeable road surface that connects to the upper end of the tunnel portal can easily be prevented. Moreover formation of ice on the tunnel portal resulting from confined water flowing down from the road surface on the tunnel portals in frosty periods is prevented. The drainage duct placed can be prefabricated elsewhere in longitudinal parts or as substantially one unity.

The drainage duct can be situated above an edge of a transition slab, which with a bearing edge supports on a bearing edge at the upper end of the tunnel portal.

The drainage duct forms a body having walls that can be made elsewhere in parts or at least substantially as one unity for instance of synthetic material. Advantageously the drainage duct may have a length corresponding to the width of the tunnel portal floor, which improves the ease of placement, no connections between successive parts need to be made as a result of which the duct can be stronger and work (for instance synthetic welding activities) can be saved on.

In one embodiment the drainage duct above the first passage has a flange projecting sideward to the outside, wherein the flange preferably extends into a slot in a horizontal head edge of the tunnel portal. In that way, optionally supplemented by a putty in the slot, an upward water shield/sealing can be realised, thus promoting the water escaping through the first passages. The drainage duct may on both sides be provided with flanges projecting sideward. The flanges may also enhance the positional fixity of the drainage duct in the structure.

In an efficient embodiment the drainage duct is a gutter-shaped body and provided with at least one second passage for receiving precipitation, as a result of which two functions can be combined. The second passages may for instance be provided with a grid-shaped cover that is passable, as known from drainage gutters in pavings. The cover may be detachable for inspection purposes and cleaning.

If the drainage duct has a bottom and sidewalls and the first passage is provided in a sidewall spaced apart above the duct bottom, the first passage will be positioned above the lowest point of the drainage duct (considered in cross-section) and remain free of dirt passed along with the precipitation into the drainage duct for a long period of time.

In order to prevent soil particles from entering the drainage duct a filter may be provided for filtering water entering through the first passage. The filter may be part of a replaceable filter insert piece. The filter insert piece may comprise a filter cloth, for instance PF90 by Aquaflow ©.

The tunnel and tunnel portals may have substantially water-impermeable sidewalls.

In one embodiment the tunnel trough is tubular, so provided with a cover. In another embodiment the tunnel trough is open at the upper side, like a sunken road.

The tunnel arrangement is particularly suitable for applications for local agricultural traffic and/or cyclists.

According to a further aspect the invention provides a gutter, in particular a gutter to be placed in a tunnel arrangement according to the invention, provided with a bottom wall, two sidewalls and an upper wall, wherein at least one sidewall is provided with at least one first passage for receiving groundwater and the upper wall is provided with at least one second passage for receiving precipitation.

Preferably the bottom wall is watertight, not provided with holes, so that an as smooth as possible surface is provided for promoting the flow through the gutter and for preventing the accumulation of dirt. The upper wall may be a detachable cover, as mentioned above.

As discussed above one or both sidewalls in the gutter may be provided with a flange projecting sideward, which is situated above the first passage. The gutter according to the invention may be provided with end walls, wherein at least one, preferably both end walls, is/are provided with a water passage aperture.

The gutter may be provided with a filter for filtering water entering through the first passage. The filter may be part of a replaceable filter insert piece. The filter insert piece may comprise a filter cloth, for instance PF90 by Aquaflow ©.

It is noted that in JP 2002-276012 an insert piece for a street inlet is shown, having an upper wall provided with water passage apertures and a bottomless cylinder extending downward therefrom, the wall of which cylinder is provided with drainage holes.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figure 1 shows a schematic vertical longitudinal section of an exemplary embodiment of a tunnel arrangement according to the invention;
Figure 2 shows a detail II of figure 1;
Figure 3 shows a cross-section of a gutter in the tunnel arrangement of figure 1;
Figures 4A-C show a number of views of another embodiment of a gutter according to the invention; and
Figure 5 shows a detail like the one of figure 2 with the gutter of the figures 4A-C.

### DETAILED DESCRIPTION OF THE DRAWINGS

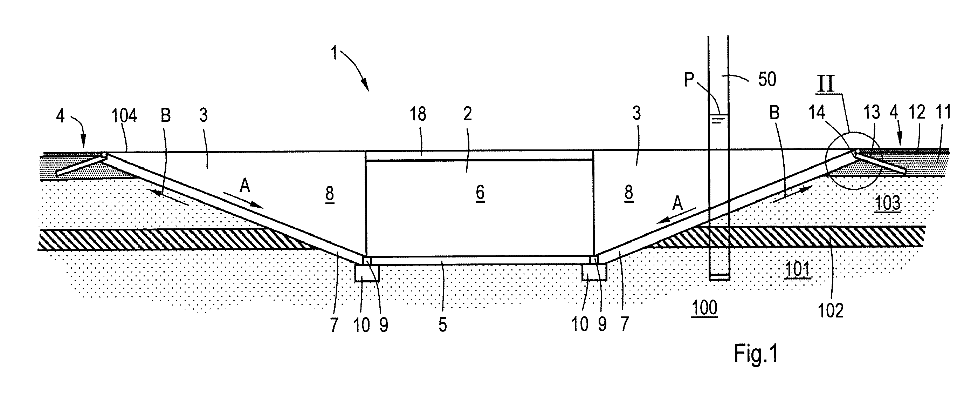

The tunnel arrangement 1 of figure 1 comprises a tunnel tube 2 and two tunnel portal troughs 3 that connect to road surfaces 4. The tunnel tube 2 has a floor 5, sidewalls 6 and a cover 18 and has been manufactured in situ of concrete. The tunnel portal troughs 3 have an tunnel portal floor 7 and two sidewalls 8 and have also been manufactured in situ of concrete. The tunnel tube 2 and the tunnel portal troughs 3 form a watertight trough. Transverse gutters 9 are situated between the tunnel floor 5 and the lower ends of the tunnel portal floors 7, which gutters are able to receive precipitation flowing down in direction A and discharge it to water cellars/ pump pits 10, where pumps are provided for further discharge of said water.

It can be seen that the soil/ground 100 in which the tunnel arrangement has been arranged is multi-layered, namely having a sand layer 101 a water-impermeable clay layer 102 and a sand layer 103. A crushed-stone base 11 is disposed on the sand layer 103, on which foundation a road surface of non-porous asphalt concrete 12 has been disposed at ground level 104.

Due to the sealing clay layer 102 there is question of confined water in the sand layer 101, namely, as schematically shown with tube 50, artesian water the rise P of which is above ground level 104.

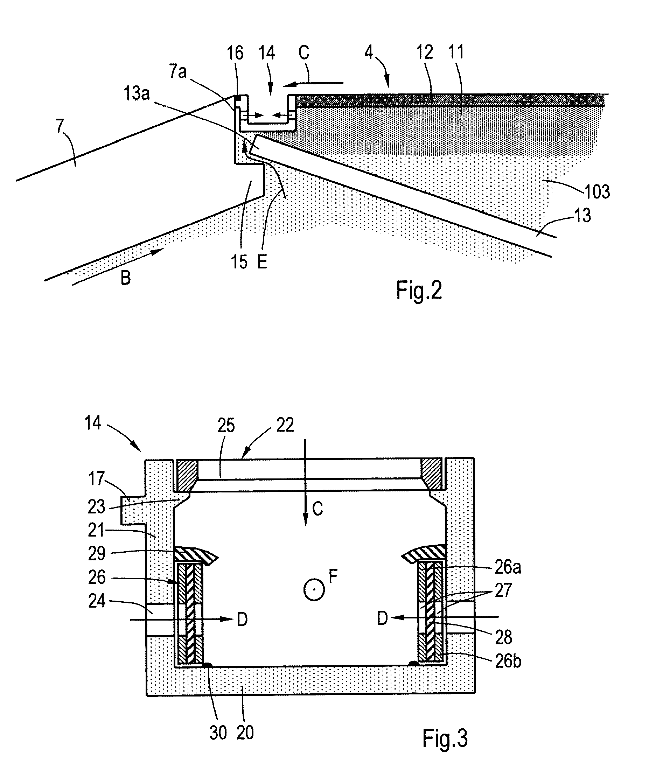

The tunnel tube 2 extends to below the clay layer 102, which as a result is interrupted, thus causing leakage paths. Confined water will as a result be able to move underneath, direction B, towards the upper end 7a (figure 2) of the tunnel portal floors 7 and may cause damage to the road surface at that location, at least in known arrangements, as well as flow down over the tunnel portals and form ice on them in frosty periods.

As shown in figure 2 the upper edge 7a of the tunnel portal floor 7 is provided with a bearing edge 15 for a transition slab 13, known per se. New is that between the edge 7a and the road surface 4, above the transition slab edge 13a a drainage duct in the shape of a transverse gutter 14 according to the invention is placed. The gutter 14 has a length corresponding to the width of the tunnel portal floor. The cover (figure 3) is yet left out here.

This prefab transverse gutter 14, see figure 3, comprises a bottom wall 20, sidewalls 21 and end walls that are not shown. Said walls may be made of PE plate material. In one end wall there is a discharge opening for connection to a sewage pipe that is not shown, leading to the water cellar/pump pit 10. The upper wall 22 is a lockable, detachable, grid-shaped cover 22 having through-slits 25 and supports on supports 23 that are integral with the sidewalls 21. Holes 24 are provided in the sidewalls 21, at a distance from the bottom wall 120.

On the interior of the sidewalls 21 detachable filter insert pieces 26 have been arranged, comprising two plates 26a,b having holes 27 provided with wire gauze, which holes are in line with holes 24. Between the plates 26a,b a filter cloth 28 PF90 is placed. The plates 26a,b are connected to each other so as to be unfolded in order to be able to clean the filter cloth 28 and optionally replace it. For that purpose the filter insert pieces 26 in this example are detachably attached by means of snap tongues 29 and bulges 30. The bulges may also form a continuous ridge integrally formed with the bottom 20. The confinement of the upper edge of the filter insert pieces can also be effected with one or more L-shaped ledges, having a horizontal leg (dimension approximately the thickness of the filter insert piece) and a downwardly extending arm, wherein the leg is situated at a distance from the gutter bottom exceeding the height of a filter insert piece. Placement takes place by inserting the filter insert piece inclined with the upper edge below the leg of the ledge and turning it straight in order to bring the lower edge over the ridge. Then the filter insert piece is lowered down onto the gutter bottom and the filter insert piece is confined by the ridge and the lower end of the arm of the ledge. In case of cleaning or replacing the process is performed in reversed order.

Between the gutter 14 and the edge 7a, at the top, a band of sealing putty 16 has been disposed, upwardly sealing a leakage path for confined water beyond the holes 24 and following displacement of the edge 7a as a result of expansion/shrinkage of concrete of the tunnel portal floor 7. For further preventing said leakage path, on the sidewall 21 facing the edge, at the upper side, the gutter 14 is provided with a rib or strip 17 projecting sideward to the outside. Said strip closes off the leakage path upwardly - due to which leakage, in the area at that location above the holes 24, an increase of the water pressure might arise - and the confined water will follow the line of least resistance, which is through the holes 24.

As indicated in figures 2 and 3 the confined water arriving in direction B can flow along past the transition slab edge 13a, direction E, and through the holes 24 situated in the bottom and opening therein, in directions D into the gutter 14 and then in direction F to a further discharge. Precipitation on the road surface 4 as well is able to flow in the direction C into the gutter 14 to and via openings 25. Thus a twofold aim is achieved, namely a high pressure build-up underneath the layer 12 is counteracted, as well as water flowing down from the road surface 12 to the tunnel portal floor.

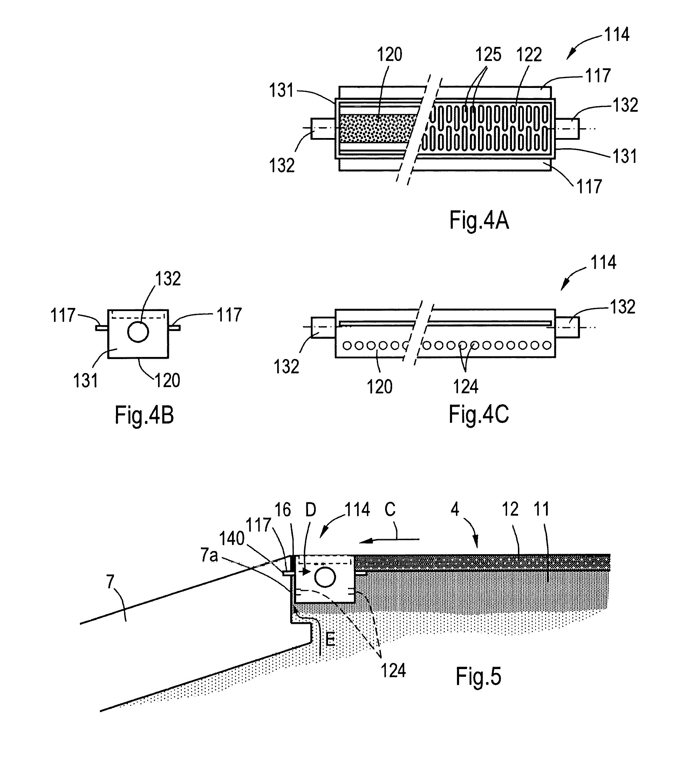

In figures 4A-C a prefab synthetic gutter 114 is shown, which substantially corresponds with the gutter 14 of figure 3. The replaceable filter insert pieces are not shown, but are present indeed. The gutter 114 has a bottom 120, sidewalls 121, end walls 131 and a cover 122 as upper wall. The end walls 131 are provided with pipe stubs 132 for discharging water from the gutter, in longitudinal direction (F). On the exterior the sidewalls are provided with flanges 117.

In figure 5 the gutter 114 is shown after having been placed in the work, wherein first a horizontal slot 140 has been milled in the head edge 7a of the tunnel portal floor 7. Then a sealing putty has been applied in the slot and subsequently when placing the gutter 114 the one flange 117 has been inserted into the slot 140. Between the gutter sidewall 121 and the edge 7a a slit is kept free, for instance of 1 cm. At the upper side the slit is sealed off by putty 116. The flange 117 with putty in the slot 140 ensures a watertight shield stopping water arriving in direction E, so that it will escape through the holes 124 to the interior of the gutter.

When placing the gutter 114 the other flange 117 is placed on a bed of crushed stone or chippings, and the flange 117 is then covered by asphalt concrete. Both flanges thus enhance the anchoring in the arrangement. It is noted that the (indeed present) transition slab is not shown here.

Depending on the circumstances whether a further drainage is present on both sides of the road, or on which side of the road the drainage is situated, both pipe stubs 132 can be used or one can be closed off. It is also possible to connect the one pipe stub to the further drainage and connect the other pipe stub to an upstream drainage path, such as a ditch along the side of the road. The water flowing out of that drainage path will then flow to the further drainage via the gutter according to the invention.

The above description is included to illustrate the operation of preferred embodiments of the invention and not to limit the scope of the invention. Starting from the above explanation many variations that fall within the spirit and scope of the present invention will be evident to an expert.

## Claims

1. Tunnel arrangement comprising a tunnel trough having a tunnel floor and one or more substantially water-impermeable tunnel portals that run upwardly inclined from a lower end situated near the tunnel floor to an upper end, wherein the tunnel is placed in a soil, in which soil a poorly permeable or impermeable layer is present, such that the tunnel floor extends into or deeper than the poorly permeable or impermeable layer, wherein confined water, in particular artesian water, is present below the poorly permeable or impermeable layer, wherein near the upper end of the tunnel portal a water discharging drainage duct is arranged, preferably extending transverse to the tunnel portal, which duct is provided with at least one first passage situated in the soil for receiving the confined water from the soil.

2. Tunnel arrangement according to claim 1, wherein the drainage duct is situated above an edge of a transition slab, which with a bearing edge supports on a bearing edge at the upper end of the tunnel portal.

3. Tunnel arrangement according to claim 1 or 2, wherein on the side facing away from the tunnel portal, the drainage duct connects to a substantially water-impermeable road surface.

4. Tunnel arrangement according to claim 1, 2 or 3, wherein the drainage duct has a length corresponding with the width of the tunnel portal.

5. Tunnel arrangement according to any one of the preceding claims, wherein the drainage duct above the first passage has a flange projecting sideward to the outside, wherein the flange preferably extends into a slot in a horizontal head edge of the tunnel portal, wherein the drainage duct is provided with flanges projecting sideward, preferably on both sides.

6. Tunnel arrangement according to any one of the preceding claims, wherein the drainage duct is a gutter-shaped body, and provided with at least one second passage for receiving precipitation, wherein the second passage preferably is provided in a detachable cover that is passable.

7. Tunnel arrangement according to any one of the preceding claims, wherein the drainage duct has a bottom and sidewalls and the first passage is provided in a sidewall spaced apart above the duct bottom.

8. Tunnel arrangement according to any one of the preceding claims, provided with a filter for filtering water entering through the first passage, wherein preferably, the filter is part of a replaceable filter insert piece, wherein, preferably, the filter insert piece comprises a filter cloth.

9. Tunnel arrangement according to any one of the preceding claims, wherein the tunnel and tunnel portals have substantially impermeable sidewalls.

10. Tunnel arrangement according to any one of the preceding claims, wherein the tunnel trough is tubular or wherein the tunnel trough is open at the upper side.

11. Tunnel arrangement according to any one of the preceding claims, adapted for local agricultural traffic or cyclists.

12. Gutter, particularly gutter to be used as drainage duct in a tunnel arrangement according to any one of the preceding claims, provided with a bottom wall, particularly a waterproof bottom wall, two sidewalls and a-when used - upper wall, wherein at least one sidewall is provided with at least one first passage for receiving groundwater, which first passage preferably is situated spaced apart above the bottom wall, and the elongated upper wall is provided with at least one second passage for receiving precipitation, wherein the upper wall preferably is a passable cover.

13. Gutter according to claim 12, wherein one or both sidewalls are provided with a flange projecting sideward, which is situated above the first passage.

14. Gutter according to claim 12 or 13, provided with end walls, wherein at least one, preferably both end walls, is/are provided with a water passage aperture.

15. Gutter according to claim 12, 13 or 14, provided with a filter for filtering water entering through the first passage, wherein, preferably, the filter is part of a replaceable filter insert piece, wherein, preferably, the filter insert piece comprises a filter cloth.
